# EUROPEAN PATENT APPLICATION

(11) **EP 4 834 720 A2**
(43) Date of publication of application: **04.11.2026**
(21) Application number: 26174971.7
(22) Date of filing: 28.04.2026
(51) Int. Cl.: B62D 23/00, B60L 50/61

(54) **HIGH-PERFORMANCE CAR WITH A DOUBLE HULL**

(30) Priority: 30.04.2025 IT 202500009699
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

A car (1) having: a frame (2) having a longitudinal symmetry axis (L), which is arranged at the centre and has a front-rear orientation; a cabin (8) configured to accommodate an occupant of the car (1) and arranged on a side of the frame (2) asymmetrically with respect to the longitudinal symmetry axis (L); at least two drive wheels (4); a first electric motor (14) connected to a first drive wheel (4); a second electric motor (14) connected to a second drive wheel (4); a first generation assembly (15) having a first electric generator (17) and a first internal combustion engine (16) provided with a first drive shaft (19) which is mechanically connected only to the first electric generator (17) and, therefore, is mechanically independent of the drive wheels (4); and a second electric generator (17) mechanically independent of the first electric generator (17) and a second internal combustion engine (16) provided with a second drive shaft (19) which is mechanically connected only to the second electric generator (17) and, therefore, is mechanically independent of the drive wheels (4).

## Description

### CROSS-REFERENCE TO RELATED APPLICATIONS

This patent application claims priority from Italian patent application no. 102025000009699 filed on April 30, 2025, the entire disclosure of which is incorporated herein by reference.

### TECHNICAL FIELD

The present invention relates to a high-performance car.

### PRIOR ART

As is known, a high-performance car normally has a bodywork defining one single cabin arranged in a central position to accommodate the driver and possibly one or more additional passengers.

Typically, the bodywork further also defines a front compartment and a rear compartment which are arranged in front of and behind the cabin, respectively, and contain the powertrain and possibly also a trunk.

In 1947, the *"Tarf twin torpedo"* was manufactured; designed and driven by engineer-racer Piero Taruffi, it set 22 speed records between 1948 and 1957. The automobile is described in patent applications FR975352A, FR1013651A and FR1017506A and is characterized by a double-hull body; in particular, two steel-tube lattice frames are provided covered with two very elongated aluminium drops that resemble the shape of two torpedoes joined to each other by tubes covered with two thin wing-like profiles. The two frames are respectively intended to accommodate on one side racer, instrument controls and tanks and on the other side the internal combustion engine. The front section of the two *"torpedoes"* is overall reduced with respect to that of any other motor vehicle, thus with the evident advantage of a greater aerodynamic penetration and the possibility to achieve, the installed power being equal, a top speed higher than that of a motor vehicle with equal motorization.

In 1955, Enrico Nardi manufactured a motor vehicle having a setting similar to the *"Tarf twin torpedo"* and thus characterized by a double-hull body which houses, in the hull on the left, the internal combustion engine and the transmission and, in the hull on the right, accommodates the driver and the controls inside a mono-bodywork structure that acts as fuel tank. The cooling system is positioned between the two hulls and has a radiator shaped according to a wing-like profile.

Patent application JP2022059690A describes a series-type hybrid vehicle in which the thermal engine is not directly connected to the wheels and has the sole function of actuating a generator that produces electrical energy intended to power an electric motor which is the sole responsible for the traction. In particular, two internal combustion engines are provided independent of each other which actuate two generators independent of each other: one generator powers an electric motor connected to the front wheels, whereas the other generator powers an electric motor connected to the rear wheels.

### DESCRIPTION OF THE INVENTION

The object of the present invention is to provide a car that allows achieving a very high performance.

According to the present invention, a high-performance car is provided, according to what claimed by the appended claims.

The claims describe preferred embodiments of the present invention forming integral part of the present description.

### BRIEF DESCRIPTION OF THE DRAWINGS

The present invention will now be described with reference to the accompanying drawings, which illustrate some non-limiting example embodiments thereof, wherein:
- Figure 1 is a perspective view of a car manufactured in accordance with the present invention;
- Figure 2 is a schematic view of the car of Figure 1; and
- Figure 3 is a schematic view of a generation assembly of the car of Figure 1.

### PREFERRED EMBODIMENTS OF THE INVENTION

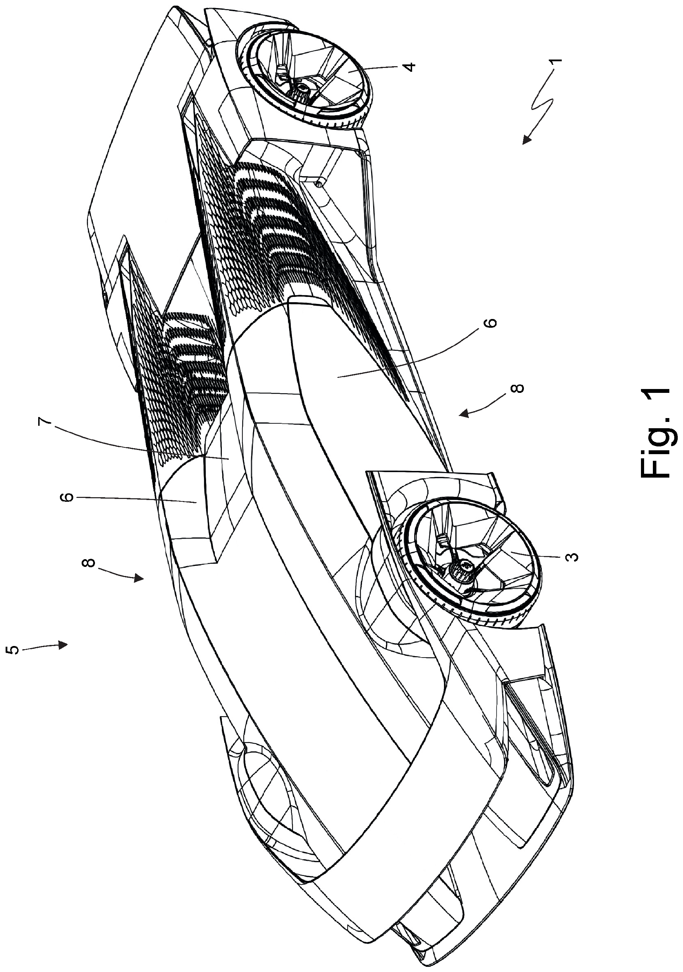

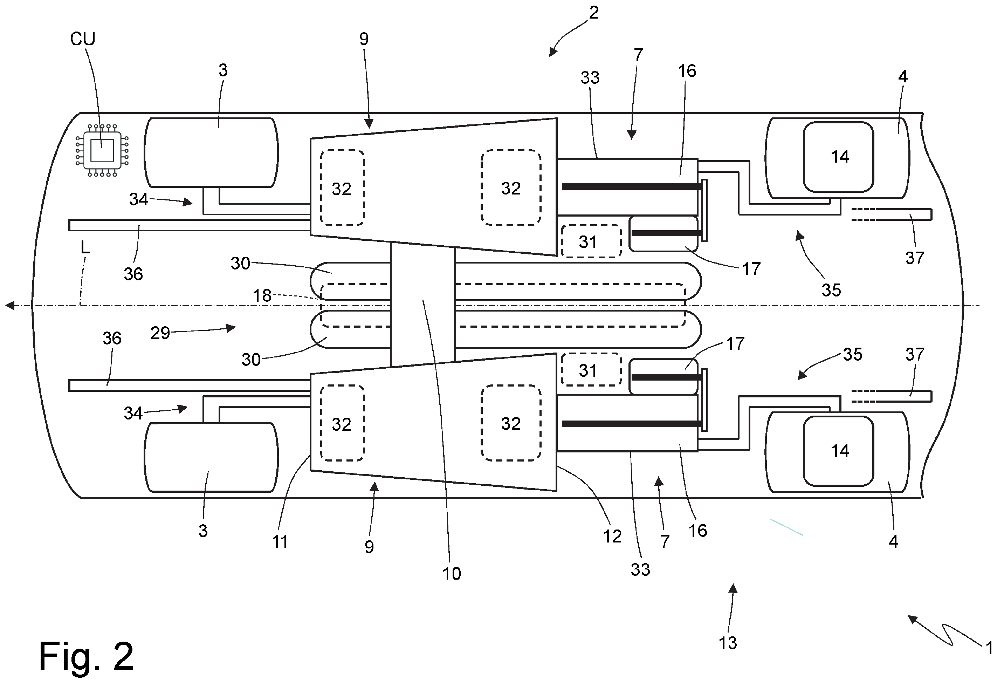

In Figure 1, reference numeral 1 indicates, as a whole, a car provided with a frame 2 (partially illustrated in Figure 2) which supports two front driven wheels 3 and two rear drive wheels 4. The frame 2 (therefore the car 1) has a longitudinal symmetry axis L (illustrated in Figure 2) which is arranged at the centre and has a front-rear orientation (namely along the advancement direction of the car 1); the longitudinal symmetry axis L represents the direction of travel of the car 1 and coincides with a roll axis of the car 1.

The frame 2 is covered by a body 5 which constitutes the outer covering of the car 1. The body 5 comprises two hulls (shells) 6 which are arranged on the two opposite sides of the car 1 (namely one hull 6 is arranged on the right side and the other hull 6 is arranged on the left side), are separate and spaced apart from each other (namely are located at a non-zero distance from each other) and are connected to each other by a joining element 7 arranged at the centre. Namely, the walls of each of the two hulls 6 do not have portions in common or do not intersect with the walls of the other one of the two hulls 6.

Inside the two hulls 6, two cabins 8 are defined distinct from each other and each understood as an environment adapted as a whole to accommodate a human driver in suitable conditions for driving the car 1; therefore, the expression "cabin" excludes cramped environments and, more precisely, unsuitable to accommodate the driver in a posture typically fit for driving. Both cabins 8 are actually equipped to accommodate the driver, therefore they can both comprise respective seats. Alternatively or additionally, both cabins 8 can contain respective driving means or devices to enable the driver to drive the car 1; for example, each of the driving devices can comprise a steering wheel and pedals (for example a braking pedal and an accelerator pedal) with functions typical per se and not described in further detail. Clearly, when one of the driving devices in one of the cabins 8 is in use, the other one of the driving devices in the other cabin 8 is normally disabled for safety; this can occur automatically via a program on a control unit of the car 1 or via a key that can enable only one of the driving devices, while the other driving device remains disabled. In this manner, the driver can choose whether to drive on the right or left side of the car 1, by simply entering the desired cabin 8; obviously, the other cabin can be utilized by a passenger that does not drive the car 1.

The two cabins 8 are arranged on the two opposite sides of the car 1 and thus leave the central part of the car 1 free; consequently, each cabin 8 is entirely arranged on the side with respect to the longitudinal symmetry axis L and is not intersected by the longitudinal symmetry axis L (which is located at the centre of the car 1). In other words, each cabin 8 is arranged on a side of the frame 2 asymmetrically with respect to the longitudinal symmetry axis L.

According to what is illustrated in Figure 2, the frame 2 comprises a right component which is arranged on the right side and in which a right cabin 8 is obtained and a left component which is arranged on the left side and is preferably mirror-like with respect to the right component. In particular, according to what is illustrated in Figure 2, the frame 2 comprises two hollow structures 9 which are arranged on the two opposite sides of the car 1 (namely one hollow structure 9 is arranged on the right side and the other hollow structure 9 is arranged on the left side) and are separate and spaced apart from each other (namely are located at a non-zero distance from each other); namely, the walls of each of the two hollow structures 9 do not have portions in common or do not intersect with the walls of the other one of the two hollow structures 9. In other words, each component of the frame 2 comprises a hollow structure 9 inside which a corresponding cabin 8 is obtained.

Furthermore, the frame 2 comprises a connection structure 10 which is arranged at the centre between the two components and connects the two components to each other, namely the two hollow structures 9 are connected to each other by a connection structure 10 arranged at the centre.

Each hollow structure 9 supports a respective hull 6 and is covered by the respective hull 6; namely each hull 6 encloses on its inside a respective hollow structure 9 which supports the hull 6. In particular, each hollow structure 9 delimits a respective cabin 8 constituting a safety cell which ensures the integrity of the cabin 8 in case of impact. According to a preferred but non-binding embodiment, the hollow structures 9 are made of a composite material (for example carbon fibre or the like).

Each hollow structure 9 has in plan the shape of an isosceles trapezoid having a flat front wall 11 (perpendicular to the longitudinal symmetry axis L) which is located in front of the hollow structure 9 and a flat rear wall 12 (parallel to the front wall 11 and perpendicular to the longitudinal symmetry axis L) which is located behind the hollow structure 9.

The connection structure 10 of the frame 2 supports the connection element of the body 5 and develops essentially transversely (namely perpendicular to the longitudinal symmetry axis L) to connect the two hollow structures 9 to each other.

The car 1 comprises a standard hybrid propulsion system 13 comprising two reversible electric motors 14 (i.e. that can operate both as electric motor absorbing electrical energy and generating a mechanical torque, and as electric generator absorbing mechanical energy and generating electrical energy) which are coupled to the corresponding rear drive wheels 4 and are configured to apply a torque to the rear drive wheels 4 or to apply a braking torque to the rear drive wheels 4. In other words, the two electric motors 14 are mainly utilized as motors but in case of deceleration of the car 1 they can also be utilized as generators.

In the embodiment illustrated in the accompanying figures, only the two rear wheels 4 are drive wheels (namely are coupled to the two electric motors 14); according to other embodiments not illustrated only the two front wheels 3 are drive wheels (namely are coupled to the two electric motors 14) or all four wheels 3 and 4 are drive wheels (namely are coupled to four respective electric motors 14).

In the preferred embodiment illustrated in the accompanying figures, each electric motor 14 is arranged inside a respective rear drive wheel 4, namely occupies the central space around which the respective rear drive wheel 4 rotates. According to a different embodiment not illustrated, the electric motors 14 are arranged externally to the rear drive wheels 4.

The propulsion system 13 further comprises two generation assemblies 15, each of which comprises an internal combustion engine 16 (namely a thermal engine) which is connected to a respective reversible electric generator 17 (i.e. that can operate both as electric generator absorbing mechanical energy and generating electrical energy, and as electric motor absorbing electrical energy and generating a mechanical torque). In other words, in each generation assembly 15, the electric generator 17 is mainly utilized as generator but occasionally can also be utilized as motor (for example when starting the internal combustion engine 16).

The two generation assemblies 15 are mechanically totally separate from and independent of each other, namely do not have any type of mechanical connection between them. In particular, each generation assembly 15 is supported by a respective hollow structure 9 of the frame 2 and is inserted inside a respective hull 6.

The propulsion system 13 comprises an electrical energy storage device 18 provided with chemical batteries which is preferably arranged in a central position (namely is located between the two hulls 6 and thus between the two hollow structures 9), and is located inside the joining element 7 of the body. According to a possible embodiment, the storage device 18 is supported (also or only) at the centre by the connection structure 10 of the frame 2; alternatively, the storage device 18 is supported (also or only) laterally by the hollow structures 9. The storage device 18 is protected from the lateral impacts and from the longitudinal impacts by the hollow structures 9 and by the internal combustion engines 16.

The function of the storage device 18 is to store the electrical energy that is generated by the electric motors 14 during the regenerative braking (namely during the deceleration phases of the car 1) and possibly also the electrical energy generated (occasionally) in excess by the two generation assemblies 15.

Each electric motor 14 is driven by a respective AC/DC electronic power converter (i.e. an inverter) which is connected to the storage device 18 and similarly each electric generator 17 is driven by a respective AC/DC electronic power converter (i.e. an inverter) which is connected to the storage device 18; in particular, each electronic power converter is bidirectional and comprises one side in direct current connected to the storage device 18 and one side in three-phase alternating current which is connected to an electric motor 14 or an electric generator 17.

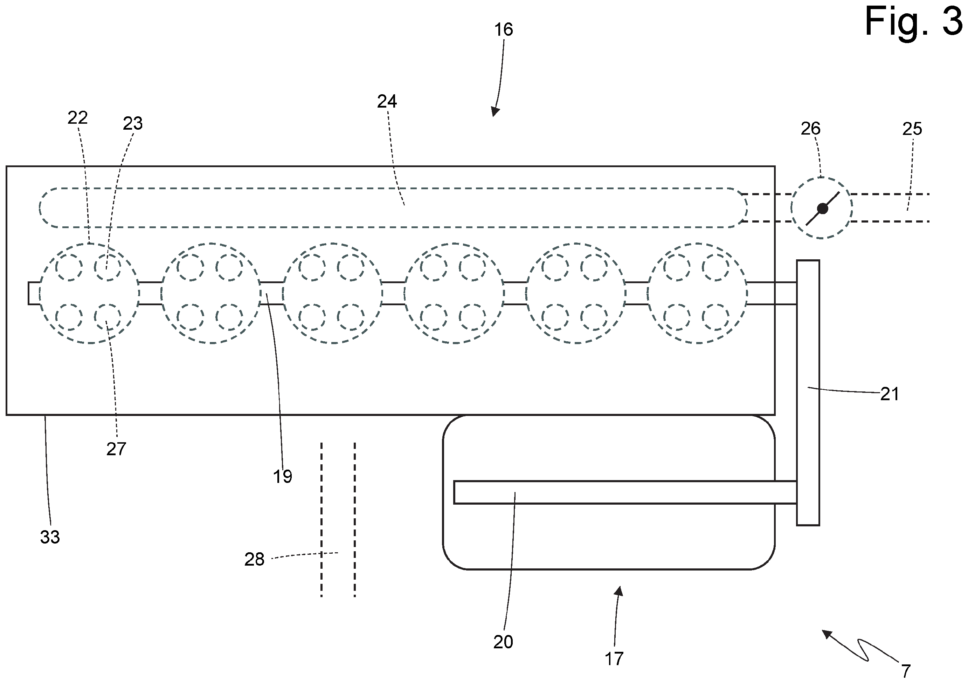

According to what is illustrated in Figure 3, each internal combustion engine 16 comprises a drive shaft 19 which is firmly connected to a shaft 20 of the corresponding electric generator 17 by means of a transmission device 21 having a fixed transmission ratio. Namely, between the drive shaft 19 of each internal combustion engine 16 and a shaft 20 of the corresponding electric generator 17 no clutch (which can separate the connection) is interposed and no gearbox or other type of variator (which can modify the transmission ratio) is interposed. According to a preferred embodiment, each transmission device 21 comprises a cascade of gears and in particular comprises a side gear wheel integral with the drive shaft 19 of the respective internal combustion engine 16, an another side gear wheel integral with the shaft 20 of the respective electric generator 17, and a central gear wheel which is mounted idle, is arranged between the two side gear wheels and engages with both side gear wheels.

Preferably, each drive shaft 19 is oriented longitudinally and is thus parallel to the longitudinal symmetry axis L.

The two generation assemblies 15 (therefore the respective internal combustion engines 16) are arranged on the two opposite sides of the car 1 and thus leave the central part of the car 1 free; consequently, each generation assembly 15 (therefore the respective internal combustion engine 16) is entirely arranged on the side with respect to the longitudinal symmetry axis L and is not intersected by the longitudinal symmetry axis L (which is located at the centre of the car 1).

According to a preferred embodiment, in each generation assembly 15, the shaft 20 of the electric generator 17 is parallel and non-coaxial to the drive shaft 19 of the internal combustion engine 16 and is connected to the drive shaft 19 of the internal combustion engine 16 by means of the transmission device 21. According to a different embodiment not illustrated, in each generation assembly 15, the shaft 20 of the electric generator 17 is parallel and coaxial to the drive shaft 19 of the internal combustion engine 16 and is directly fixed to the drive shaft 19 of the internal combustion engine 16 (namely without the interposition of the transmission device 21).

In the embodiment illustrated in the accompanying figures, the electric generators 17 are radial-flow (therefore are tendentially narrow and long); alternatively, the electric generators 17 are axial-flow (therefore are tendentially wide and short).

According to what is illustrated in Figure 3, each internal combustion engine 16 comprises six cylinders 22 which are arranged in line; in each cylinder 22 a respective piston alternatively slides which is connected to the drive shaft 19 by means of a connecting rod. According to other embodiments, the number and/or the arrangement of the cylinders 22 could be different (for example four or five cylinders 22 could be provided arranged in line or six cylinders 22 could be provided arranged in a "V" configuration, for example, with a reduced angle between the two main bearings to contain the transverse bulk). Each cylinder 22 is provided with two intake valves 23 which are connected to an intake manifold 24; in turn, the intake manifold 24 is connected to an intake duct 25 provided with a throttle 26 to adjust the airflow rate along the intake duct 25. Each cylinder 22 is provided with two exhaust valves 27 which are connected to an exhaust duct 28.

As described in the foregoing, both internal combustion engines 16 are mechanically totally independent of each other (namely no transmission of the motion occurs between the drive shafts 19 of the two internal combustion engines 16) and are mechanically totally independent of the rear drive wheels 4 (namely no transmission of the motion occurs between the drive shafts 19 of the two internal combustion engines 16 and the rear drive wheels 4). The connection between the internal combustion engines 16 and the rear drive wheels 4 occurs *"electrically",* as the electrical energy generated by the two generation assemblies 15 actuated by the internal combustion engines 16 is utilized to power the two electric motors 14 coupled to the rear drive wheels 4.

Further embodiment details regarding the propulsion system 13 comprising the two generation assemblies 15 are described in Italian patent applications 102024000019276, 10202400002091, 102024000020923, 102024000020929, 102024000020935, 102024000020938, 102024000020941, 102024000020944, 102024000020947, 102024000020968 incorporated herein by reference.

According to a preferred embodiment illustrated in Figure 2, the car 1 comprises a fuel tank 29 which is common for both internal combustion engines 16 and is arranged between the two hollow structures 9 of the frame 2 (namely is arranged between the two hulls 6 of the body 5). The fuel tank 29 is protected from the lateral impacts and from the longitudinal impacts by the hollow structures 9 and by the internal combustion engines 16.

The fuel tank 29 is arranged in a central position between the two internal combustion engines 16 (namely between the two hulls 6 and thus between the two cabins 8) and symmetrically with respect to the longitudinal symmetry axis L.

According to a preferred embodiment illustrated in the accompanying figures, the two internal combustion engines 16 are powered by hydrogen and the fuel tank 29 comprises at least one bottle 30 of cylindrical shape oriented longitudinally (i.e. parallel to the longitudinal symmetry axis L); preferably, two bottles 30 are provided side by side (namely arranged next to each other at the same height from the ground). Preferably, the two bottles 30 are arranged symmetrically on opposite sides of the longitudinal symmetry axis L.

According to a possible embodiment, each bottle 30 is supported (also or only) at the centre by the connection structure 10 of the frame 2; alternatively, each bottle 30 is supported (also or only) laterally by the hollow structures 9. In particular, each bottle 30 is supported not in the area of its opposite ends but in the area of an intermediate portion thereof arranged between its opposite ends.

As mentioned in the foregoing, the electrical energy storage device 18 is arranged in a central position (namely is located between the two hulls 6 and thus between the two hollow structures 9), and is located inside the joining element 7 of the body; in particular, the storage device 18 is preferably arranged under the bottles 30 of the fuel tank 29 as it is heavier than the bottles 30. However, the space available for the storage device 18 below the bottles 30 of the fuel tank 29 could be too reduced and thus it could be necessary to arrange electrical energy storage devices 31 and 32 in another position, which can be alternative or additional to the storage device 18 (namely they can take the place of the storage device 18 or can add to the storage device 18).

In other words, the car 1 comprises an electrical energy storage system which can comprise all the storage devices 18, 31 and 32 or only a part of the storage devices 18, 31 and 32.

Preferably, two electrical energy storage devices 31 can be provided, each of which is coupled to a respective generation assembly 15 and is arranged inside the corresponding hull 6 at the side of the internal combustion engine 16. Preferably, each storage device 31 is arranged at the side of the internal combustion engine 16 and inwards in such a way that it is protected from the lateral impacts by the internal combustion engine 16.

Preferably, two electrical energy storage devices 32 can be provided, each of which is coupled to a respective generation assembly 15 and is arranged inside the corresponding hull 6 and inside the corresponding hollow structure 9. Preferably, each storage device 32 is arranged in the lower part of the hollow structure 9 below the driver's cockpit. According to a preferred embodiment, each storage device 32 is divided into two components: one component of the storage device 32 is arranged under a seat cushion of a seat of the driver's cockpit, whereas the other component of the storage device 32 is arranged under the pedals of the driver's cockpit.

Each internal combustion engine 16 comprises a monobloc 33 which is fixed to the rear wall 12 of the corresponding hollow structure 9; by way of example, the rear wall 12 of the corresponding hollow structure 9 could comprise metal brackets (partially embedded in the composite material) which protrude outwards and to which the monobloc 33 of the internal combustion engine 16 is fixed (by means of bolts). The electric generator 17 is directly fixed to the monobloc 33 of the corresponding internal combustion engine 16; namely the monobloc 33 of the internal combustion engine 16 supports the respective electric generator 17.

According to a preferred embodiment, each internal combustion engine 16 is bearing and thus is integral part of the frame 2; namely, the monobloc 33 of each internal combustion engine 16 acts as stressed element of the frame 2 and constitutes the rear part of the frame 2.

The car 1 comprises two front suspensions 34, each of which connects a respective front wheel 3 to the frame 2 and in particular to a corresponding hollow structure 9. The car 1 further comprises two rear suspensions 35, each of which connects a respective rear wheel 4 to the frame 2 and in particular to the monobloc 33 of a corresponding internal combustion engine 16.

According to a preferred embodiment, the car 1 comprises two front struts 36 (beams), each of which is oriented longitudinally, is arranged in front of the frame 2, and is fixed to the frame 2 and in particular to a corresponding hollow structure 9. Similarly, the car 1 comprises two rear struts 37 (beams), each of which is oriented longitudinally, is arranged behind the frame 2, and is fixed to the frame 2 and in particular to the monobloc 33 of a corresponding internal combustion engine 16. The struts 36 and 37 are dimensioned to deform in a controlled manner in case of impact and thus absorb the kinetic energy of the impact.

The car 1 comprises a control unit CU (schematically illustrated in Figure 2) configured to supervise the operation of the car 1 and in particular configured to supervise the operation of the propulsion system 13.

The embodiments described herein can be combined with one another.

The car described above has numerous advantages.

Firstly, the car 1 described above allows achieving a very high performance.

Furthermore, the car 1 described above offers a drivability that is relatively simple and, at the same time, also very satisfying.

Finally, the car 1 described above has a relatively low production cost thanks to the extreme rationality and simplicity of the arrangement of the various components.

### LIST OF THE REFERENCE NUMERALS OF THE FIGURES

- 1: car
- 2: frame
- 3: front wheels
- 4: rear wheels
- 5: body
- 6: hull
- 7: joining element
- 8: cabin
- 9: hollow structure
- 10: connection structure
- 11: front wall
- 12: rear wall
- 13: propulsion system
- 14: electric motor
- 15: generation assembly
- 16: internal combustion engine
- 17: electric generator
- 18: storage device
- 19: drive shaft
- 20: shaft
- 21: transmission device
- 22: cylinders
- 23: intake valve
- 24: intake manifold
- 25: intake duct
- 26: throttle
- 27: exhaust valve
- 28: exhaust duct
- 29: fuel tank
- 30: bottle
- 31: storage device
- 32: storage device
- 33: monobloc
- 34: front suspension
- 35: rear suspension
- 36: front strut
- 37: rear strut
- CU: control unit
- L: longitudinal direction

## Claims

1. A car (1) comprising:
a frame (2) having a longitudinal symmetry axis (L), which is arranged at the centre and has a front-rear orientation;
a first cabin (8), which is configured to accommodate a first occupant of the car (1);
two front wheels (3) arranged one on a right side of the frame (2) and the other one on a left side of the frame (2);
two rear wheels (4) arranged one on the right side of the frame (2) and the other one on the left side of the frame (2);
a first electric motor (14) mechanically connected to a first wheel (4) to cause the first wheel (4) to rotate and, therefore, make the first wheel (4) a drive wheel;
a second electric motor (14) mechanically connected to a second wheel (4) to cause the second wheel (4) to rotate and, therefore, make the second wheel (4) a drive wheel;
a first generation assembly (15) comprising a first electric generator (17) configured to supply electrical energy to the first electric motor (14) and a first internal combustion engine (16) provided with a first drive shaft (19), which is mechanically connected only to the first electric generator (17) and, therefore, is mechanically independent of the drive wheels (4); and
a second generation assembly (15) comprising a second electric generator (17) configured to supply electrical energy to the second electric motor (14) and mechanically independent of the first electric generator (17), and a second internal combustion engine (16) provided with a second drive shaft (19), which is mechanically connected only to the second electric generator (17) and, therefore, is mechanically independent of the drive wheels (4);
the car (1) is **characterized in that:**
the first drive wheel (4) is arranged on the right side of the frame (2) and is, in particular, a rear wheel (4);
the first electric motor (14) is mechanically connected only and exclusively to the first drive wheel (4) and, therefore, is totally independent of and disconnected from the other wheels (3, 4);
the second drive wheel (4) is arranged on the left side of the frame (2) and is, in particular, a rear wheel (4);
the second electric motor (14) is mechanically connected only and exclusively to the second drive wheel (4) and, therefore, is totally independent of and disconnected from the other wheels (3, 4).

2. The car (1) according to claim 1, wherein:
the first cabin (8) is arranged on a first side of the frame (2) asymmetrically with respect to the longitudinal symmetry axis (L); and
a second cabin (8) is provided, which is configured to accommodate a second occupant of the car (1), is arranged on a second side of the frame (2) opposite the first side and is separate from and independent of the first cabin (8) in such a way that a first inner space delimited by the first cabin (8) is completely isolated from a second inner space delimited by the second cabin (8).

3. The car (1) according to claim 1 or 2, wherein the frame (2) comprises a first component, which is arranged on the first side and in which the first cabin (8) is obtained, a second component, which is arranged on the second side and preferably is mirror-like with respect to the first component, and a connection structure (10), which is arranged at the centre between the two components and connects the two components to each other.

4. The car (1) according to claim 3, wherein:
the first component of the frame (2) supports the first generation assembly (15), the first electric motor (14) and the first drive wheel (4); and
the second component of the frame (2) supports the second generation assembly (15), the second electric motor (14) and the second drive wheel (4).

5. The car (1) according to claim 3 or 4, wherein each component of the frame (2) comprises a hollow structure (9), preferably made of a composite material, inside which a corresponding cabin (8) is obtained.

6. The car (1) according to claim 5, wherein each hollow structure (9) comprises a rear wall (12), to which a monobloc (33) of a respective internal combustion engine (16) is fixed.

7. The car (1) according to claim 6, wherein the monobloc (33) of each internal combustion engine (16) supports the corresponding first electric generator (17).

8. The car (1) according to claim 6 or 7, wherein the monobloc (33) of each internal combustion engine (16) is bearing and is an integral part of the frame (2).

9. The car (1) according to one of the claims from 1 to 8 and comprising a body (5) having two hulls (6), which are arranged on the two opposite sides of the car (1) and are separate and spaced apart from each other, and a joining element (7), which is arranged at the centre and connects the two hulls (6) to each other.

10. The car (1) according to one of the claims from 1 to 9, wherein each electric motor (14) is arranged within a corresponding drive wheel (4).

11. The car (1) according to one of the claims from 1 to 10, wherein, in each generation assembly (15), a shaft (20) of the electric generator (17) is parallel and non-coaxial to a drive shaft (19) of the internal combustion engine (16) and is connected to the drive shaft (19) of the internal combustion engine (16) by means of a transmission device (21).

12. The car (1) according to one of the claims from 1 to 11, wherein the first cabin (8) is entirely arranged on the side with respect to the longitudinal symmetry axis (L) and is not intersected by the longitudinal symmetry axis (L) .

13. The car (1) according to one of the claims from 1 to 12 and comprising a fuel tank (29), which is arranged in a central position between the two internal combustion engines (16) and symmetrically with respect to the longitudinal symmetry axis (L).

14. The car (1) according to claim 13, wherein the fuel tank (29) comprises at least one bottle (30), which has a cylindrical shape, is oriented parallel to the longitudinal symmetry axis (L) and is configured to contain a gaseous fuel, in particular hydrogen.

15. The car (1) according to claim 14, wherein the fuel tank (29) comprises two bottles (30) arranged side by side and arranged symmetrically on opposite sides of the longitudinal symmetry axis (L).

16. A car (1) comprising:
a frame (2) having a longitudinal symmetry axis (L), which is arranged at the centre and has a front-rear orientation;
a first cabin (8), which is configured to accommodate a first occupant of the car (1);
two front wheels (3) arranged one on a right side of the frame (2) and the other one on a left side of the frame (2);
two rear wheels (4) arranged one on the right side of the frame (2) and the other one on the left side of the frame (2);
at least two drive wheels (4);
a first electric motor (14) which is mechanically connected only and exclusively to a first drive wheel (4) and, therefore, is totally independent of and disconnected from the other wheels (3, 4);
a second electric motor (14) which is mechanically connected only and exclusively to a second drive wheel (4) and, therefore, is totally independent of and disconnected from the other wheels (3, 4); and
an electrical energy storage system;
the car (1) is **characterized in that:**
the first cabin (8) is arranged on a first side of the frame (2) asymmetrically with respect to the longitudinal symmetry axis (L); and
a second cabin (8) is provided, which is configured to accommodate a second occupant of the car (1), is arranged on a second side of the frame (2) opposite the first side and is separate from and independent of the first cabin (8) in such a way that a first inner space delimited by the first cabin (8) is completely isolated from a second inner space delimited by the second cabin (8).

17. The car (1) according to claim 16, wherein the electrical energy storage system comprises a first storage device (18), which is arranged in a central position between the two cabins (8) and symmetrically with respect to the longitudinal symmetry axis (L).

18. The car (1) according to claim 16 or 17, wherein the electrical energy storage system comprises two second storage devices (32), each arranged in the area of a respective cabin (8) and divided into a first component arranged under a seat cushion of a seat of the driver's cockpit and a second component arranged under the pedals of the driver's cockpit.
